# EUROPÄISCHE PATENTSCHRIFT

(11) **EP 3 055 130 B1**
(45) Veröffentlichungstag und Bekanntmachung des Hinweises auf die Patenterteilung: **12.07.2017**
(21) Anmeldenummer: 13774449.6
(22) Anmeldetag: 11.10.2013
(51) Int. Cl.: B32B 27/12, B32B 27/40

(54) **ELASTISCHE BODENPLATTE**
ELASTIC FLOOR PANEL
DALLE ÉLASTIQUE

(43) Veröffentlichungstag der Anmeldung: 17.08.2016
(73) Patentinhaber: WPT GmbH, 32756 Detmold (DE)
(72) Erfinder: ROSE, Stefan, 59581 Warstein (DE); HORST, Guido, 32139 Spenge (DE); WINDMÖLLER, Ulrich, 33758 Schloß Holte-Stukenbrock (DE)
(74) Vertreter: Ter Meer Steinmeister & Partner
(86) Internationale Anmeldenummer: PCT/EP2013/071277
(87) Internationale Veröffentlichungsnummer: WO 2015/051852

(56) Entgegenhaltungen:
- WO-A1-2013/064160
- US-A1- 2005 217 932

## Beschreibung

Die vorliegende Erfindung betrifft eine elastische Bodenplatte, mit einem formstabilen Kern aus Polyurethan und einem auf dem Kern angeordneten Schichtverbund.

Bodenbeläge, die aus Bodenplatten zusammengesetzt sind, werden schon seit geraumer Zeit aus sehr unterschiedlichen Materialien zusammengesetzt. Traditionell sind Bodenpaneele aus Holz oder Holzwerkstoffen wie etwa MDF oder HDF bekannt, die mit Verbindungsprofilen zum Eingriff in das jeweils angrenzende Paneel versehen sind. Auf ihrer Oberseite weisen diese Paneele gewöhnlich eine Dekorschicht und einer abnutzungsbeständige Nutzschicht auf, während auf der Rückseite noch eine Gegenzugschicht vorhanden sein kann.

Darüber hinaus sind Bodenplatten bekannt, die aus Kunststoffmaterialien hergestellt werden, beispielsweise aus PVC. Auch Polyurethan eignet sich als Material für solche Bodenplatten. Beispielsweise ist aus der internationalen Patentanmeldung WO2013/064160 der Anmelderin ein Bodenbelag bekannt, bei welchem zumindest der Kern aus einem Polyurethan besteht, das aus einem Polyesterpolyol aus nachwachsenden Rohstoffen und aromatischem Isocyanat gewonnen wird. Dies bringt u.a. Vorteile bezüglich der Umweltverträglichkeit mit sich. Auf den Kern sind auch in diesem Fall eine Dekorschicht und eine abnutzungsbeständige Nutzschicht angeordnet. Die auf dem Kern liegenden Schichten sollen im Rahmen der vorliegenden Anmeldung allgemein als Schichtverbund bezeichnet werden, wobei angemerkt wird, dass dieser Schichtverbund auch anders ausgestaltet sein kann und beispielsweise zusätzliche oder anders geartete Schichten umfassen kann. Der hier verwendete Begriff des Schichtverbundes ist somit nicht auf die Schichtfolge beschränkt, die in der WO2013/064160 beschrieben ist.

Einer solcher Bodenbelag lässt sich zu Platten zuschneiden, die an den Rändern mit Verbindungsprofilen versehen werden. Es ist allerdings auch möglich, auf eine Profilierung an den Kanten zu verzichten und die Platten durch Aufkleben auf den Estrich aneinander angrenzend zu verlegen. Es ist vorteilhaft, wenn die Bodenplatten eine gewisse Elastizität aufweisen, da diese zu positiven Gebrauchseigenschaften wie etwa einer guten Trittschalldämmung, einem guten Eindruckverhalten bei Belastungen und einem Kraftabbau im Hinblick auf die sportfunktionellen Eigenschaften führt. Der Polyurethan-Kern ist allerdings formstabil, d.h. er lässt sich zwar elastisch verformen, behält aber ohne übermäßige äußere Belastung seine Plattenform bei, so dass sich die Bodenplatte insgesamt als stabiles Gebilde handhaben lässt, in Abgrenzung zu Bodenbelägen, die die Form einer aufrollbaren Bahnenware haben.

Soll eine solche Bodenplatte zuverlässig vollflächig auf dem Untergrund verklebt werden, muss ihre Rückseite einen guten Verbund mit dem Klebstoff eingehen können. Zu diesem Zweck war es bisher üblich, die Rückseite der Bodenplatten anzuschleifen oder mit einer Oberflächenstruktur zu versehen, wie etwa einer Wabenstruktur oder dergleichen, in die der Klebstoff gut eindringen kann. Trotz dieser zusätzlichen Maßnahmen ist der Halt zwischen dem Dispersionskleber und der Rückseite der Bodenplatte häufig nicht zufriedenstellend.

Es ist außerdem erwünscht, die oben genannten positiven Eigenschaften der Bodenplatte auch durch eine entsprechende Ausgestaltung ihrer Rückseite weiter zu verbessern. Beispielsweise kann die Trittschalldämmung verbessert werden, und auch die Krafteinleitung in Bodenplatten, die als Sportböden verwendet werden. Diese Verbesserungen sollen sich auch dann auswirken, wenn die Bodenplatten nicht mit dem Untergrund verklebt werden, wie oben beschrieben, sondern lediglich lose und mit ineinander greifenden Kantenprofilen verlegt werden.

Es ist daher ein Ziel der vorliegenden Erfindung, eine Bodenplatte zu schaffen, die sich bei Bedarf zuverlässiger mit einem Untergrund verkleben lässt und deren Eigenschaften, insbesondere die Trittschalldämmung und die Elastizität, weiter verbessert sind.

Diese Aufgabe wird erfindungsgemäß durch eine elastische Bodenplatte mit den Merkmalen des Anspruchs 1 gelöst.

Die elastische Bodenplatte gemäß der vorliegenden Erfindung ist auf ihrer Rückseite mit einer Fasermatte beschichtet, deren Fasern aus Glas, PET, PP, Polyester oder nachwachsenden Rohstoffen bestehen. Das Fasergebilde der Matte ist auf der Seite, die dem Kern zugewandt ist, durch eine Sperrschicht abgedichtet.

Zwischen die Fasern der Matte kann ein flüssiger Klebstoff eindringen, der auf dem Estrich ausgebracht worden ist, so dass der Klebstoff und die Fasermatte und somit die gesamte Bodenplatte einheitlich miteinander verbunden werden. Diese Verbindung ist weit zuverlässiger als bei Bodenplatten, die lediglich an ihrer Unterseite angeschliffen sind oder eine Prägung auf ihrer Rückseite aufweisen. Ein Anheben der verklebten Bodenplatte ist zerstörungsfrei nicht mehr möglich. Die Sperrschicht sorgt dafür, dass beim Herstellungsprozess der Bodenplatte die Fasermatte auf ihre Rückseite aufkaschiert oder aufgeklebt werden kann, ohne dass die Zwischenräume zwischen den Fasern durch einen Klebstoff oder das Material des Kerns, je nach Herstellungsverfahren, ausgefüllt oder verklebt werden. Im Herstellungsprozess kann somit ein flüssiges Material auf die Fasermatte aufgetragen werden, ohne dass deren gewünschte Eigenschaften bei der Verwendung beeinträchtigt werden.

Die Fasermatte kann aufgrund des vergleichsweise lockeren Zusammenhalts ihrer Fasern eine gewisse Elastizität aufweisen, die sich positiv auf die Gesamteigenschaften der Bodenplatte auswirkt, und zwar auch dann, wenn die Bodenplatte lose, also ohne Verkleben verlegt wird. Beispielsweise kann die Trittschalldämmung verbessert werden, und auch die Krafteinleitung in Bodenplatten, die als Sportböden verwendet werden. Schließlich kann die Fasermatte auch eine Gegenzugschicht zu dem Schichtverbund auf der Oberseite der Bodenplatte bilden.

Insgesamt stellt die erfindungsgemäße Bodenplatte ein komplexes Schichtgebilde dar, das gegenüber den Bodenplatten, die oben als Stand der Technik beschrieben sind, verbesserte Eigenschaften aufweist und zugleich zuverlässiger und dauerhafter zu verlegen ist.

Gemäß einer bevorzugten Ausführungsform der vorliegenden Erfindung bilden die Fasern der Fasermatte ein Vlies.

Gemäß einer weiteren bevorzugten Ausführungsform sind die Fasern miteinander zu einer Gewebematte verwoben.

In beiden Fällen können zwischen den Fasern Zwischenräume verbleiben, in die der flüssige Kleber eindringen kann und somit den erwünschten Verbund mit der Bodenplatte eingeht.

Gemäß einer weiteren bevorzugten Ausführungsform ist die Fasermatte auf die Rückseite des Kerns aufgeklebt. Der hierzu verwendete Kleber dringt nicht in die Fasermatte ein, da dies durch die Sperrschicht zuverlässig verhindert wird. Die Zwischenräume zwischen den Fasern bleiben somit zur Aufnahme des Klebers zum Aufkleben der Bodenplatte auf den Estrich erhalten.

Gemäß einer weiteren bevorzugten Ausführungsform ist die Sperrschicht aus Polyolefin, Polyethylenterephtalat (PET), Polyamid (PA) oder thermoplastischem Polyurethan (TPU) gebildet.

Weiter vorzugsweise besteht der Kern aus Polyurethan, das aus einem Polyesterpolyol aus nachwachsenden Rohstoffen und aromatischem Isocyanat gewonnen wird. Hierbei handelt es sich um ein biogenes Polyol, das gute Eigenschaften hinsichtlich der Umweltverträglichkeit aufweist und sich nachhaltig produzieren lässt.

Gemäß einer weiteren bevorzugten Ausführungsform der vorliegenden Erfindung umfasst der Schichtverbund der Bodenplatte, der auf dem Kern angeordnet ist, zumindest eine Dekorschicht, die aus einem Zellstoffpapier besteht, das mit Polyurethan imprägniert ist, eine auf der dem Kern abgewandten Seite der Dekorschicht liegende Nutzschicht, die aus einem Polyurethan besteht, das aus einem Polyol und einem aliphatischen Isocyanat gewonnen wird, und eine Glasfasermatte. Die Glasfasermatte kann das Eindruckverhalten und das Rückstellverhalten sowie die Dimensionsstabilität weiter verbessern.

Gemäß einer weiteren bevorzugten Ausführungsform ist die erfindungsgemäße Bodenpatte zumindest an zwei gegenüberliegenden Außenkanten profiliert. Hierdurch können Verbindungsprofile geschaffen werden, welche zwei benachbart verlegte Bodenplatten zusammenhalten.

Weiter vorzugsweise enthält der Kern Füllstoffe zur Gewichtserhöhung. Der Kern besteht also in diesem Fall nicht ausschließlich aus reinem Polyurethan, sondern der Polyurethanmasse, zur Bildung des Kerns sind beispielsweise mineralische Füllstoffe zugesetzt, die ein höheres spezifisches Gewicht als das Polyurethan aufweisen.

Ein erfindungsgemäßes Verfahren zur Herstellung einer Bodenplatte der vorstehend beschriebenen Art umfasst die folgenden Schritte:
a) Ablegen einer Fasermattenbahn, die aus Fasern aus Glas, PET, PP, Polyester oder nachwachsenden Rohstoffen gebildet wird und einseitig durch eine Sperrschicht abgedichtet ist, auf einem Trägerband, derart, dass sich die Sperrschicht oben befindet;
b) Auftragen einer Schicht aus einer Polyurethan-Masse auf die Fasermattenbahn zur Bildung des Kerns, welche Polyurethan-Masse Polyurethan und gegebenenfalls Füllstoffe enthält;
c) Auftragen eines Klebstoffs auf die Oberseite des Kerns;
d) Aufkleben eines bahnförmigen Schichtverbundes auf die mit Klebstoff versehene Oberseite des Kerns; und
e) Zuschneiden der in Schritt d) hergestellten Bahn zu Bodenplatten.

Die Fasermattenbahn kann in dem vorstehend genannten Schritt a) beispielsweise auf einem Transportband abgelegt werden, das über eine Heizplatte läuft. Die Polyurethanschicht, die zur Bildung des Kerns in Schritt b) auf die Fasermatte aufgetragen wird, kann unter der Wärmeeinwirkung der Heizplatte ausreagieren. Aufgrund der Sperrschicht der Fasermatte kann das im flüssigen Zustand aufgetragene Polyurethan nicht zwischen die Fasern der unten liegenden Fasermattenbahn eindringen, so dass die Zwischenräume zwischen den Fasern erhalten bleiben. Der Schichtverbund, der in dem Schritt d) aufgeklebt wird, kann bereits vorgefertigt vorhanden sein. Durch das Zuschneiden in Schritt e) werden schließlich Bodenplatte hergestellt, deren Abmessungen sich zum Verlegen eignen und welche in sich formstabil sind, d.h. ihre Plattenform ohne Einwirkung größerer äußerer Belastungen beibehalten. Diese Bodenplatten sind beispielsweise wie herkömmliche Bodenpaneele aus Holzwerkstoffen oder Kunststoffen stapelbar und lassen sich in entsprechenden Gebinden transportieren.

Gemäß einer alternativen Ausführungsform der vorliegenden Erfindung umfasst das Verfahren zur Herstellung einer Bodenplatte die folgenden Schritte:
a') Ablegen eines bahnförmigen Schichtverbundes auf einem Trägerband;
b') Auftragen einer Schicht aus einer Polyurethan-Masse auf den bahnförmigen Schichtverbund zur Bildung des Kerns, welche Polyurethan-Masse Polyurethan und gegebenenfalls Füllstoffe enthält;
c') Auftragen eines Klebstoffs auf die Oberseite des Kerns;
d') Aufkleben einer Fasermattenbahn, die aus Fasern aus Glas, PET, PP, Polyester oder nachwachsenden Rohstoffen gebildet wird und einseitig durch eine Sperrschicht abgedichtet ist, auf die mit Klebstoff versehene Oberseite des Kerns, derart, dass sich die Sperrschicht unten befindet; und
e') Zuschneiden der in Schritt d') hergestellten Bahn zu Bodenplatten.

Bei diesem alternativen Verfahren werden die Schichten in umgekehrter Reihenfolge hergestellt, indem zunächst der Schichtverbund, der im verlegten Zustand die Oberseite der Bodenplatte bildet, mit der Nutzseite nach unten auf dem Trägerband in Schritt a') abgelegt wird und die weiteren Schichten der Reihe nach aufgetragen werden, bis zu der in Schritt d') aufgeklebten Fasermattenbahn, die die Rückseite der Bodenplatte bildet. Die Sperrschicht der Fasermattenbahn verhindert hier, dass der auf die Oberseite des Kerns in Schritt c') aufgetragene Klebstoff zwischen die Fasern eindringen und diese verkleben kann.

Bei der Polyurethanmasse, die in Schritt d) bzw. b') zur Bildung des Kerns dient, kann es sich um reines Polyurethan handeln, oder um Polyurethan, das mit Zuschlagstoffen oder Füllstoffen versehen worden ist. Typischerweise handelt es sich auch hier um Füllstoffe zur Gewichtserhöhung, wie etwa mineralische Füllstoffe, deren spezifisches Gewicht höher ist als das von Polyurethan.

Vorzugsweise wird während oder nach den oben genannten Schritten c) bzw. c') der Polyurethanschicht zur Bildung des Kerns Wärme zugeführt. Dies kann beispielsweise durch die bereits erwähnten Heizplatten unter dem Trägerband erfolgen. Alternativ ist es jedoch auch möglich, Infrarotstrahlung von oben auf die Polyurethanschicht einwirken zu lassen.

Vorzugsweise ist die Fasermattenbahn in diesem Fall eine Vliesbahn.

Weiter vorzugsweise ist die Fasermattenbahn eine Gewebebahn.

Gemäß einer weiteren bevorzugten Ausführungsform werden die Bodenplatten nach dem Schnitt des Zuschneidens in Schritt e) bzw. e') zumindest an zwei gegenüberliegenden Außenkanten profiliert.

Im folgenden werden bevorzugte Ausführungsbeispiele der vorliegenden Erfindung anhand der Zeichnung näher erläutert.
- Fig. 1: zeigt einen schematischen Schnitt durch den Schichtaufbau einer Ausführungsform der erfindungsgemäßen elastischen Bodenplatte, und
- Fig. 2 und 3: sind schematische Darstellungen zweier verschiedener Verfahrensabläufe zur Herstellung der erfindungsgemäßen elastischen Bodenplatte,

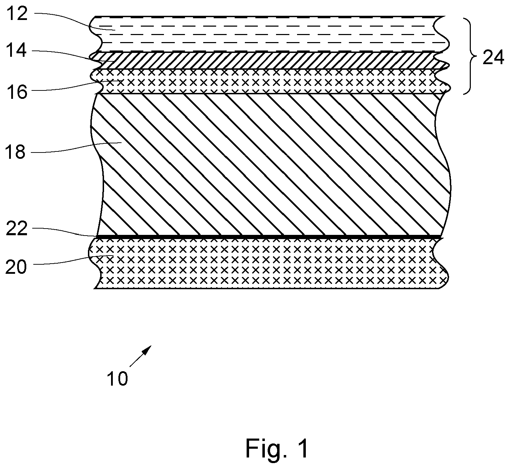

In Fig. 1 ist ein Querschnitt durch eine elastische Bodenplatte 10 dargestellt, die einen Schichtaufbau aufweist. Dieser umfasst (von oben nach unten, d.h. von ihrer Nutzseite zur Rückseite) eine transparente Nutzschicht 12, die die Oberseite der Bodenplatte 10 bildet, eine darunter liegende Dekorschicht 14, die ein Dekor trägt, eine Glasfasermatte 16 unter der Dekorschicht 14, einen Kern 18 und eine Fasermatte 20, die den Schichtaufbau der Bodenplatte 10 zum Untergrund hin abschließt. Einzelheiten dieses Schichtaufbaus sollen im folgenden näher beschrieben werden.

Die Nutzschicht 12 besteht vollständig aus einem Polyurethan (PU), das aus einem Polyol und einem aliphatischen Isocyanat gewonnen wird. Dieses Polyol ist im vorliegenden Fall kein biogenes Polyol, stammt somit nicht aus nachwachsenden Rohstoffen. Ferner weist die Nutzschicht 12 eine hohe Kratzfestigkeit, Reinigungsfreundlichkeit, UV-Stabilität, ein gutes Eindruckverhalten und Rückstellverhalten und niedrige Emissionen toxischer Gase im Brandfall auf. Unter dem Eindruckverhalten ist das Verhalten des Materials bei einer mechanischen Belastung zu verstehen. Die Oberfläche der Bodenplatte 10 ist sehr widerstandsfähig gegenüber solchen Einwirkungen. Falls sich Eindrücke bilden, beispielsweise durch eine punktuelle Belastung, so werden diese nahezu vollständig wieder zurückgebildet, wenn die mechanische Last entfernt wird.

Bei der vorliegenden Ausführungsform weist die Nutzschicht 12 eine Dicke zwischen 0,1 und 0,5 mm auf.

Der unter der Nutzschicht 12 befindliche Dekorfilm 14 besteht aus einem Dekorpapier, nämlich einer Zellstoffschicht, die mit Polyurethan getränkt ist. Dieses Polyurethan kann aus einem biogenen Polyol synthetisiert worden sein, das also aus einem nachwachsenden Rohstoff gewonnen wird. Das Dekorpapier ist auf seiner Oberseite mit einem Dekor bedruckt.

Zur Erhöhung der Dimensionsstabilität und zur weiteren Verbesserung des Eindruck- und Rückstellverhaltens der Bodenplatte 10 umfasst der Schichtaufbau ferner eine Glasfasermatte 16, die zwischen der Dekorschicht 14 und dem darunter liegenden Kern 18 angeordnet ist. Diese Glasfasermatte ist ebenfalls mit Polyurethan getränkt, das aus einem biogenen Polyol hergestellt wird. Sie hat eine Dicke zwischen 0,2 mm und 0,5 mm.

Der Kern 18 besteht im vorliegenden Fall aus einem Polyurethan, das aus einem Polyesterpolyol aus nachwachsenden Rohstoffen und aromatischem Isocyanat gewonnen wird.

Aromatisches Isocyanat ist zwar weniger hochwertig als aliphatisches Isocyanat, doch da der Kern 18 nicht an der Oberseite der Bodenplatte 10 frei liegt, kann hier auch die Verwendung von Werkstoffen in Kauf genommen werden, die weniger hochwertig sind. Dennoch hat der Kern 18 sehr gute Eigenschaften hinsichtlich der Umweltverträglichkeit und ist sehr emissionsarm.

Der Kern 18 ist mittelhart, also elastisch komprimierbar, jedoch im belastungsfreien Zustand formstabil. Das bedeutet, dass der Kern 18 und damit die gesamte Bodenplatte 10 ihre Plattenform bei der Handhabung weitgehend beibehält, wobei leichte Durchbiegungen der Bodenplatte 10 unter ihrem Eigengewicht in Kauf genommen werden. Diese Formstabilität ermöglicht es, dass die erfindungsgemäße elastische Bodenplatte 10 wie andere herkömmliche Bodenplatten aus Kunststoff- oder Holzmaterialien gehandhabt werden kann, also wie übliche Bodenpaneele oder Bodenfliesen verlegt werden kann. Die erfindungsgemäße Bodenplatte 10 vereinigt somit die Vorteile der bisherigen Bodenplatten bezüglich der Handhabung und Verlegung mit den Vorteilen eines elastischen Bodenbelags, insbesondere bezüglich der Trittschalldämmung und der Krafteinleitung in den Bodenbelag.

Die hier dargestellte Bodenplatte 10 kann auf einen Estrich mittels eines Dispersionsklebers aufgeklebt werden, so dass nebeneinander angeordnete Bodenplatten 10 den Bodenbelag bilden. Zu diesem Zweck umfasst die Bodenplatte 10 auf ihrer Rückseite eine Fasermatte 20, bei der es sich beispielsweise um eine Vliesmatte handeln kann. Denkbar ist jedoch auch die Verwendung einer Gewebematte als Fasermatte 20. Zwischen die Fasern kann ein flüssiger Dispersionskleber eindringen, der auf dem Estrich zuvor verteilt worden ist. Auf diese Weise wird ein fester Verbund zwischen dem Untergrund und der elastischen Bodenplatte 10 geschaffen. Die Bodenplatte 10 lässt sich dann nicht mehr zerstörungsfrei vom Untergrund entfernen.

Die Fasern der Fasermatte 20 können beispielsweise Glasfasern sein oder aus PET (Polyethylentherephtalat), PP (Polypropylen), Polyester oder auch aus nachwachsenden Rohstoffen bestehen, also Naturfasern sein. Auf der Seite, die dem Kern 18 zugewandt ist und die sich in Fig. 1 oben befindet, ist die Fasermatte 20 durch eine Sperrschicht 22 aus Polyolefin abgedichtet. Die Sperrschicht 22 kann allerdings auch aus anderen Materialien bestehen, beispielsweise aus Polyethylenterephtalat (PET), Polyamid (PA) oder thermoplastischem Polyurethan (TPU). Diese Sperrschicht 22 hat unter anderem die Funktion, dass von der Oberseite der Bodenplatte 10 her keine Flüssigkeiten in die Fasermatte 20 eindringen können und somit die Zwischenräume zwischen den Fasern ausfüllen. Dies ist für die Herstellung der elastischen Bodenplatte 10 von Bedeutung. Insbesondere kann beispielsweise die Fasermatte 20 mit Hilfe eines flüssigen Klebstoffs auf die Rückseite des Kerns 18 aufgeklebt sein. Die Sperrschicht 22 verhindert somit, dass dieser Klebstoff zwischen dem Kern 18 und der Fasermatte 20 zwischen die Fasern eindringt.

Neben der Funktion, den Klebstoff zum Aufkleben der Bodenplatte 10 aufzunehmen, kann die Fasermatte 20 darüber hinaus noch weitere Funktionen haben, die sich auf die Qualität der Bodenplatte 10 auswirken. Beispielsweise kann die Fasermatte 20 eine Gegenzugschicht auf der Unterseite der Bodenplatte 10 bilden und zu deren Dimensionsstabilität beitragen. Ferner kann die Fasermatte 20 aufgrund des relativ lockeren Faserbunds eine gewisse Elastizität gegenüber Druckbelastungen aufweisen, die auch dann gewahrt bleibt, wenn der Klebstoff vom Untergrund her nicht vollständig in die Fasermatte 20 eindringt und eine klebstofffreie Zwischenschicht innerhalb der Fasermatte 20 verbleibt, deren Hohlräume die elastischen Eigenschaften verbessern. Auch das Trittschallverhalten und die Krafteinleitung in den Untergrund können hierdurch verbessert werden. Diese Verbesserungen wirken sich auch dann aus, wenn die Bodenplatte 10 lose, also ohne Klebstoff auf dem Untergrund verlegt wird.

Wie vorstehend beschrieben, lassen sich mehrere Bodenplatten 10 nebeneinander liegend auf dem Untergrund verlegen. Zusätzlich können die einzelnen Bodenplatten 10 an ihren Außenkanten profiliert sein und somit Verbindungsprofile umfassen, durch welche sich aneinander angrenzende Bodenplatten formschlüssig miteinander verbinden lassen. Ein versehentliches Verschieben der Bodenplatten 10 gegeneinander ist dann nicht mehr möglich.

Die Nutzschicht 12, die Dekorschicht 14 und die Glasfasermatte 16 bilden einen gemeinsamen Schichtverbund 24, der in einem Herstellungsverfahren zur Herstellung der vorstehend beschriebenen Bodenbelags 10 vorproduziert werden kann, während die übrigen Schichten, also insbesondere der Kern 18 und die Fasermatte 20 erst nachfolgend mit diesem Schichtverbund 24 verbunden werden. Dies soll im einzelnen nachfolgend beschrieben werden.

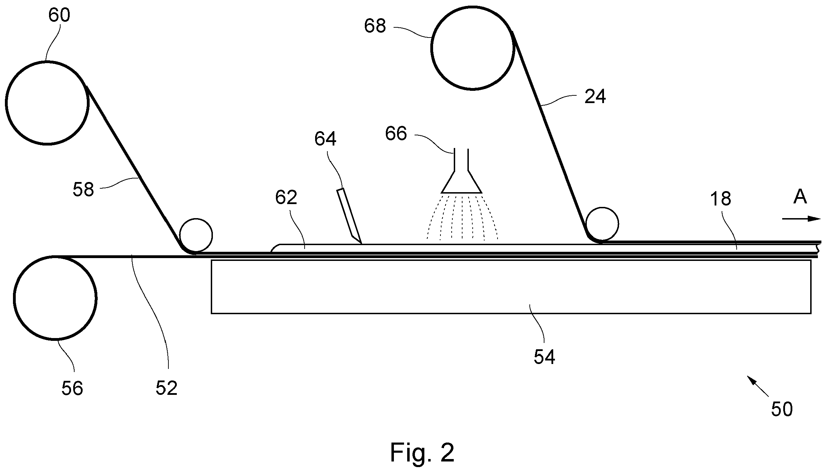

Fig. 2 ist eine schematische Darstellung einer ersten Ausführungsform eines Verfahrens zur Herstellung der elastischen Bodenplatte 10 der vorstehend beschriebenen Art. Diese Figur zeigt einen Teil einer Produktionsanlage, mit deren Hilfe dieses Verfahren ausgeführt wird. Die Anlage 50 umfasst ein Trägerband 52, das in Fig. 2 von links nach rechts in Richtung des Pfeils A über eine Heizplatte 54 geführt wird. Auf der Oberseite der Heizplatte 54 liegt das Trägerband 52 flach auf. Es kann sich hierbei um ein Endlosband handeln, dessen Obertrum über die Heizplatte 54 geführt wird, oder aber das Trägerband 52 wird von einer Rolle 56 abgerollt und am Ende der Produktionsstrecke (nicht dargestellt) wieder aufgerollt. Auf einem Abschnitt des Trägerbands 52, der auf der Heizplatte 54 aufliegt, wird eine Fasermattenbahn 58 flach abgelegt, die von einer Rolle 60 abgewickelt wird. Diese Fasermattenbahn 58 entspricht in ihrer Ausführung der im Zusammenhang mit Fig. 1 beschriebenen Fasermatte 20, d.h. die Fasermattenbahn 58 wird aus Fasern aus Glas, PET, PP, Polyester oder nachwachsenden Rohstoffen gebildet und ist einseitig durch eine Sperrschicht 22 aus Polyolefin, Polyethylenterephtalat (PET), Polyamid (PA) oder thermoplastischem Polyurethan (TPU) abgedichtet. Diese Sperrschicht 22 liegt in Fig. 2 oben, d.h. auf der dem Trägerband 52 abgewandten Oberseite der Fasermattenbahn 58, die im übrigen wahlweise als Vlies oder auch als Gewebematte ausgebildet sein kann.

In einem nachfolgenden Verfahrensschritt wird auf die abgelegte Fasermattenbahn 58 eine Schicht 62 aus einer Polyurethan-Masse aufgetragen, welche den Kern 18 bilden soll. Diese Masse wird in flüssiger Form auf die Fasermattenbahn 58 gegossen oder gespritzt. Durch eine Rakel 64 wird die Dicke der Schicht 62 bestimmt, welche durch geeignete Messvorrichtungen kontrolliert werden kann (nicht dargestellt). Diese Polyurethan-Masse kann ausschließlich aus reinem Polyurethan bestehen. Sie hat allerdings auch Füllstoffe oder andere Zuschlagsstoffe enthalten, wie beispielsweise mineralische Füllstoffe, deren spezifisches Gewicht höher ist als das des Polyurethans und die zu einer Gewichtserhöhung der herzustellenden Bodenplatte 10 beitragen sollen.

Die flüssige Polyurethan-Masse reagiert unter Wärmeeinwirkung aus, so dass die Schicht 62 erhärtet. Die Wärme wird durch die Heizplatte 54 unter dem Trägerband 52 zugeführt, welche durch das Trägerband 52 und die Fasermattenbahn 58 hindurch in die Schicht 62 hinein wirkt. Der Kern 18 ist nach dem Ausreagieren der Schicht 62 vollständig hergestellt. Anschließend kann in einem weiteren Verfahrensschritt ein Klebstoff auf die Oberseite des Kerns 18 aufgetragen werden. Der Klebstoff muss nicht kontinuierlich flächig aufgetragen werden, sondern kann auch in Form feiner Tröpfchen aufgesprüht werden. Hierzu kann beispielsweise ein Drehteller 66 dienen, der über dem Kern 18 angeordnet ist und flüssigen Klebstoff radial versprüht, so dass eine annähernd gleichmäßige Verteilung der Klebstofftröpfchen auf dem Kern 18 erreicht wird.

In einem weiteren Verfahrensschritt wird ein bahnenförmiger Schichtverbund 24 auf den Kern 18 aufgebracht und mit diesem verklebt. Dieser Schichtverbund 24 kann beispielsweise in der oben beschriebenen Weise die Nutzschicht 12, die Dekorschicht 14 und die Glasfasermatte 16 aus Fig. 1 umfassen. Der Schichtverbund 24 wird in vorgefertigter Form angeliefert und von einer Rolle 68 abgewickelt und auf der mit dem Klebstoff versehenen Oberseite des Kerns 18 abgelegt.

Die durch die vorstehend beschriebenen Verfahrensschritte hergestellte Bahn bildet nach dem Ausreagieren eine kontinuierliche Platte, die in einem weiteren Verfahrensschritt zu einzelnen Bodenplatten 10 zugeschnitten wird, d.h. die entstandene formstabile Bahn wird abschnittsweise in Querrichtung und in Längsrichtung zerteilt. Es ist ferner möglich, die auf die auf diese Weise hergestellten Bodenplatten zusätzlich an ihren Außenkanten zu profilieren, um Verbindungsprofile zum Eingriff mit einer jeweils benachbarten Bodenplatte zu schaffen. Diese Profilierung kann durch Fräsen erfolgen und mehrere einzelne Profilierungsschritte umfassen, in denen verschiedene Fräswerkzeuge zum Einsatz kommen.

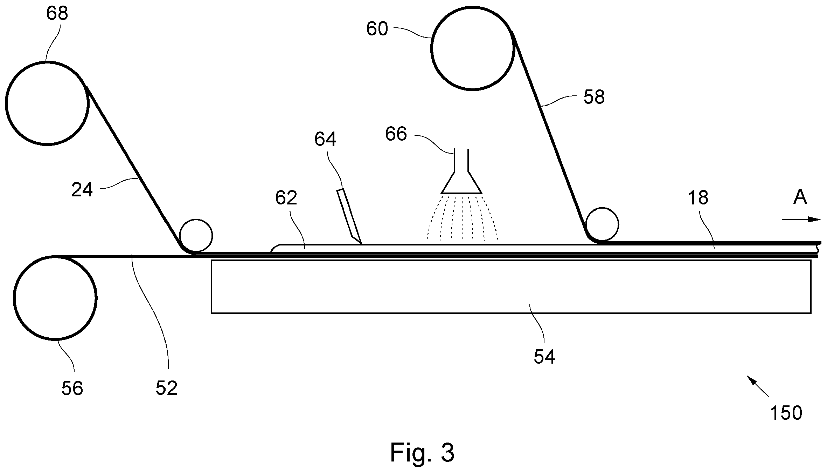

Alternativ zu dem vorstehend anhand von Fig. 2 beschriebenen Verfahren ist es möglich, die Bodenplatte 10 gewissermaßen in umgekehrter Reihenfolge aufzubauen. Dies soll nachfolgend anhand von Fig. 3 beschrieben werden.

Die Produktionsanlage 150 in Fig. 3 umfasst ebenfalls ein Trägerband 52, das von einer Rolle 60 abgewickelt wird und flach über eine horizontale Heizplatte 54 geführt wird. Diesbezüglich ist die Anlage 150 in Fig. 3 mit der Anlage 50 aus Fig. 2 identisch. Auf die Oberseite dieses Trägerbandes 52 wird der bahnförmige Schichtverbund 24 abgelegt, der von einer Rolle 68 abgespendet wird, so dass er flach auf der Oberseite des Trägerbands 54 aufliegt und mit diesem zusammen in Richtung des Pfeils A über die Heizplatte 54 geführt wird. Der bahnförmige Schichtverbund 24 umfasst auch hier wieder die Nutzschicht 12, die Dekorschicht 14 und die Glasfasermatte 16 und wird so auf dem Trägerband 52 abgelegt, dass sich die Nutzschicht 12 unten befindet und die Glasfasermatte 16 oben.

Auf den abgelegten bahnförmigen Schichtverbund 24 wird anschließend eine Schicht 62 aus einer flüssigen Polyurethan-Masse zur Bildung des Kerns 18 aufgetragen. Auch in diesem Fall kann die Polyurethan-Masse aus reinem Polyurethan bestehen oder aber zusätzlich Füllstoffe enthalten, wie oben beschrieben. Diese Schicht 62 wird mittels einer Rakel 64 auf die gewünschte Schichtdicke begrenzt. Die Schicht 62 kann unter Einwirkung der Wärme der Heizplatte 54, die durch das Trägerband 52 und den Schichtverbund 24 hindurch wirkt, aushärten. Es wird angemerkt, dass statt der Heizplatte 54 auch eine andere Wärmequelle eingesetzt werden kann, etwa eine Quelle für Infrarotstrahlung, die sich über der Schicht 62 befindet.

Unter der Wärmeinwirkung reagiert die Polyurethan-Masse der Schicht 62 aus und bildet den Kern 18. Auf diesen Kern wird ein Klebstoff aufgetragen. Im vorliegenden Fall wird der Klebstoff mittels eines Drehtellers 66 zerstäubt und radial über die Oberseite der Schicht 62 verteilt.

Anschließend wird die Fasermattenbahn 58 auf die Oberseite des Kerns 18 aufgelegt und mit diesem verklebt. Die Fasermattenbahn 58 wird von einer Rolle 60 abgerollt und derart auf den Kern 18 aufgelegt, dass sich die Sperrschicht 22 unten befindet, d.h. dem Kern 18 zugewandt ist. Durch die Sperrschicht 22 wird verhindert, dass der Klebstoff, der die Verbindung zwischen dem Kern 18 und der Fasermattenbahn 58 schafft, zwischen die Fasern der Fasermattenbahn 58 eindringen kann. Die Fasermattenbahn 58 kann beispielsweise eine Vliesbahn oder eine Gewebebahn sein.

Die durch vorstehend beschriebenen Schritte hergestellte Bahn wird durch Zerteilen in Querrichtung in Bodenplatten 10 vereinzelt, die anschließend zumindest an zwei gegenüberliegenden Außenkanten mit einer Profilierung durch Fräsen versehen werden können.

Bei dieser Ausführungsform des Verfahrens zur Herstellung der Bodenplatte 10 befindet sich also die Nutzseite unten, und die Rückseite der Bodenplatte 10 ist nach oben gewandt.

Das Polyurethan zur Bildung der Schicht 62 des Kerns 18 kann auch im vorliegenden Fall aus einem Polyesterpolyol aus nachwachsenden Rohstoffen und aromatischem Isocyanat gewonnen werden. Die Dekorschicht 14 des Schichtverbunds 24 kann auch wiederum aus Zellstoffpapier bestehen, das mit Polyurethan imprägniert ist, und die Nutzschicht 12 kann aus einem Polyurethan bestehen, das aus einem Polyol und einem aliphatischen Isocyanat gewonnen wird.

## Patentansprüche

1. Elastische Bodenplatte (10), mit einem formstabilen Kern (18) aus Polyurethan und einem auf dem Kern (18) angeordneten Schichtverbund (24), **dadurch gekennzeichnet, dass** die Bodenplatte (10) auf ihrer Rückseite mit einer Fasermatte (20) beschichtet ist, deren Fasern aus Glas, PET, PP, Polyester oder nachwachsenden Rohstoffen bestehen und die auf ihrer dem Kern (18) zugewandten Seite durch eine Sperrschicht (22) abgedichtet ist.

2. Bodenplatte gemäß Anspruch 1, **dadurch gekennzeichnet, dass** die Fasern ein Vlies bilden.

3. Bodenplatte gemäß Anspruch 1, **dadurch gekennzeichnet, dass** die Fasern miteinander zu einer Gewebematte verwoben sind.

4. Bodenplatte gemäß einem der vorhergehenden Ansprüche, **dadurch gekennzeichnet, dass** die Fasermatte (20) auf die Rückseite des Kerns (18) aufgeklebt ist.

5. Bodenbelag gemäß einem der vorhergehenden Ansprüche, **dadurch gekennzeichnet, dass** die Sperrschicht (22) aus Polyolefin, Polyethylenterephtalat (PET), Polyamid (PA) oder thermoplastischem Polyurethan (TPU) gebildet ist.

6. Bodenplatte gemäß einem der vorhergehenden Ansprüche, **dadurch gekennzeichnet, dass** der Kern (18) aus einem Polyurethan besteht, das aus einem Polyesterpolyol aus nachwachsenden Rohstoffen und aromatischem Isocyanat gewonnen wird.

7. Bodenplatte gemäß einem der vorhergehenden Ansprüche, **dadurch gekennzeichnet, dass** der Schichtverbund (24) zumindest eine Dekorschicht (14) umfasst, die aus einem Zellstoffpapier besteht, das mit Polyurethan imprägniert ist, eine auf der dem Kern (18) abgewandten Seite der Dekorschicht (14) liegende Nutzschicht (12), die aus einem Polyurethan besteht, das aus einem Polyol und einem aliphatischen Isocyanat gewonnen wird, und eine Glasfasermatte (16).

8. Bodenplatte gemäß einem der vorhergehenden Ansprüche, **dadurch gekennzeichnet, dass** die Bodenplatte zumindest an zwei gegenüberliegenden Außenkanten profiliert ist.

9. Bodenplatte gemäß einem der vorhergehenden Ansprüche, **dadurch gekennzeichnet, dass** der Kern (18) Füllstoffe zur Gewichtserhöhung enthält.

10. Verfahren zur Herstellung einer Bodenplatte gemäß einem der Ansprüche 1 bis 9, **gekennzeichnet durch** die folgenden Schritte:
a) Ablegen einer Fasermattenbahn (58), die aus Fasern aus Glas, PET, PP, Polyester oder nachwachsenden Rohstoffen gebildet wird und einseitig durch eine Sperrschicht (22) abgedichtet ist, auf einem Trägerband (52), derart, dass sich die Sperrschicht (22) oben befindet;
b) Auftragen einer Schicht (62) aus einer Polyurethan-Masse auf die Fasermattenbahn (58) zur Bildung des Kerns (18), welche Polyurethan-Masse Polyurethan und gegebenenfalls Füllstoffe enthält;
c) Auftragen eines Klebstoffs auf die Oberseite des Kerns (18);
d) Aufkleben eines bahnförmigen Schichtverbundes (24) auf die mit Klebstoff versehene Oberseite des Kerns (18); und
e) Zuschneiden der in Schritt d) hergestellten Bahn zu Bodenplatten (10).

11. Verfahren zur Herstellung einer Bodenplatte gemäß einem der Ansprüche 1 bis 9, **gekennzeichnet durch** die folgenden Schritte:
a') Ablegen eines bahnförmigen Schichtverbundes (24) auf einem Trägerband (52);
b') Auftragen einer Schicht (62) aus einer Polyurethan-Masse auf den bahnförmigen Schichtverbund (24) zur Bildung des Kerns (18), welche Polyurethan-Masse Polyurethan und gegebenenfalls Füllstoffe enthält;
c') Auftragen eines Klebstoffs auf die Oberseite des Kerns (18);
d') Aufkleben einer Fasermattenbahn (58), die aus Fasern aus Glas, PET, PP, Polyester oder nachwachsenden Rohstoffen gebildet wird und einseitig durch eine Sperrschicht (22) abgedichtet ist, auf die mit Klebstoff versehene Oberseite des Kerns (18), derart, dass sich die Sperrschicht (22) unten befindet; und
e') Zuschneiden der in Schritt d') hergestellten Bahn zu Bodenplatten (10).

12. Verfahren gemäß Anspruch 10 oder 11, **dadurch gekennzeichnet, dass** während oder nach Schritt c) bzw. c') der Polyurethanmassen-Schicht (62) zur Bildung des Kerns (18) Wärme zugeführt wird.

13. Verfahren gemäß einem der Ansprüche 10 bis 12, **dadurch gekennzeichnet, dass** die Fasermattenbahn eine Vliesbahn (58) ist.

14. Verfahren gemäß einem der Ansprüche 10 bis 13, **dadurch gekennzeichnet, dass** die Fasermattenbahn (58) eine Gewebebahn ist.

15. Verfahren gemäß einem der Ansprüche 10 bis 14, **dadurch gekennzeichnet, dass** nach Schritt e) bzw. e') die entstandenen Bodenplatten (10) zumindest an zwei gegenüberliegenden Außenkanten profiliert werden.

## Claims

1. An elastic floor panel (10), with a dimensionally stable core (18) of polyurethane and a layered compound structure (24), which is disposed on the core (18), **characterized in that** the back of the floor panel (10) is coated with a fiber mat (20), the fibers of which consist of glass, PET, PP, polyester or renewable raw materials and which is sealed on the side facing the core (18) by a barrier layer (22).

2. The floor panel of claim 1, **characterized in that** the fibers form a nonwoven.

3. The floor panel of claim 1, **characterized in that** the fibers are interwoven with one another to form a fabric mat.

4. The floor panel of one of the preceding claims, **characterized in that** the fiber mat (20) is glued to the back of the core (18).

5. A floor covering of one of the preceding claims, **characterized in that** the barrier layer (22) is formed from polyolefin, polyethylene terephtalate (PET), polyamide (PA) or a thermoplastic polyurethane (TPU).

6. The floor panel of one of the preceding claims, **characterized in that** the core (18) consists of a polyurethane, which is obtained from a polyester polyol of renewable raw materials and an aromatic isocyanate.

7. The floor panel of one of the preceding claims, **characterized in that** the layered compound structure (24) comprises at least one decorative layer (14), which consists of a fiber paper, which is impregnated with polyurethane, a wear-resistant use layer (12), which rests on the side of the decorative layer (14) averted from the core (18) and consists af a polyurethane, which is obtained from a polyol and an alphatic isocyanate, and a fiberglass mat (16).

8. The floor panel of one of the preceding claims, **characterized in that** the floor panel is profiled at least at two opposite outer edges.

9. The floor panel of one of the preceding claims, **characterized in that** the core (18) contains fillers for increasing the weight.

10. A method for the production of a floor panel of one of the claims 1 to 9, **characterized by** the following steps:
a) depositing a fiber mat sheet (58), which is formed from fibers of glass, PET, PP, polyester or renewable raw materials, and sealed on one side by a barrier layer (22), on a carrier strip (52) in such a manner, that the barrier layer (22) is at the top;
b) applying a layer (62) of a polyurethane composition on the fiber mat sheet (58) for forming the core (18), the fiber mat composition, containing polyurethane and optionally fillers;
c) applying an adhesive on the upper side of the core (18);
d) gluing a sheet-shaped layered compound structure (24) on the upper side of the core (18), which is provided with adhesive; and
d) cutting the sheet, produced in step d), into floor panels (10).

11. A method for producing a floor panel of one of the claims 1 to 9, **characterized by** the following steps:
a') depositing a sheet-shaped layered compound structure (24) on a carrier strip (52);
b') applying a layer (62) of a polyurethane composition on the sheet-shaped layered compound structure (24) for forming the core (18), which polyurethane composition contains polyurethane and optionally fillers;
c') applying an adhesive on the upper side of the core (18);
d') gluing a fiber mat sheet (58), which is formed from fibers of glass, PET, PP, polyester or renewable raw materials, and sealed on one side by a barrier layer (22) on the upper side of the core (18), which is provided with adhesive, in such a manner, that the barrier layer (22) is at the bottom; and
e') cutting the sheet, produced in step d'), into floor panels (10).

12. The method of claims 10 or 11, **characterized in that** heat is supplied, during or after steps c) or c'), to the polyurethane composition layer (62) for forming the core (18).

13. The method of one of the claims 10 to 12, **characterized in that** the fiber mat sheet is a nonwoven (58).

14. The method of one of the claims 10 to 13, **characterized in that** the fiber mat sheet (58) is a woven fabric sheet.

15. The method of one of the claims 10 to 14, **characterized in that**, after steps e) or e'), the resulting floor panels (10) are profiled at least at two opposite outer edges.

## Revendications

1. Plaque de sol élastique (10), avec un noyau rigide (18) en polyuréthane et un composite à couches (24) disposé sur le noyau (18), **caractérisée en ce que** la plaque de sol (10) est revêtue, sur son côté arrière, d'une natte de fibres (20), dont les fibres sont constituées de verre, de PET, de PP, de polyester ou de matières premières renouvelables et qui est étanchéifiée, sur son côté orienté vers le noyau (18), par une couche de barrière (22).

2. Plaque de sol selon la revendication 1, **caractérisée en ce que** les fibres forment une toison.

3. Plaque de sol selon la revendication 1, **caractérisée en ce que** les fibres sont tissées ensemble en une natte tissée.

4. Plaque de sol selon l'une des revendications précédentes, **caractérisée en ce que** la natte de fibres (20) est collée sur le côté arrière du noyau (18).

5. Revêtement de sol selon l'une des revendications précédentes, **caractérisé en ce que** la couche de barrière (22) est constituée de polyoléfine, de polyéthylène téréphthalate (PET), de polyamide (PA) ou d'un polyuréthane thermoplastique (TPU).

6. Plaque de sol selon l'une des revendications précédentes, **caractérisée en ce que** le noyau (18) est constitué d'un polyuréthane qui est extrait d'un polyester polyol constitué de matières premières renouvelables et d'un isocyanate aromatique.

7. Plaque de sol selon l'une des revendications précédentes, **caractérisée en ce que** le composite à couches (24) comprend au moins une couche de décoration (14) qui est constituée d'un papier de cellulose imprégné de polyuréthane, une couche utilitaire (12) se trouvant sur un côté de la couche de décoration (14) opposé au noyau (18), qui est constituée d'un polyuréthane qui est extrait d'un polyol et d'un isocyanate aliphatique, et une natte de fibres de verre (16).

8. Plaque de sol selon l'une des revendications précédentes, **caractérisée en ce que** la plaque de sol est profilée au moins au niveau de deux arêtes externes opposées.

9. Plaque de sol selon l'une des revendications précédentes, **caractérisée en ce que** le noyau (18) contient des charges pour augmenter le poids.

10. Procédé de fabrication d'une plaque de sol selon l'une des revendications 1 à 9, **caractérisé par** les étapes suivantes :
a) pose d'une bande de natte de fibres (58) qui est constituée de fibres de verre, de PET, de PP, de polyester ou de matières premières renouvelables et est étanchéifiée d'un côté par une couche de barrière (22), sur une bande de support (52), de façon à ce que la couche de barrière (22) se trouve en haut ;
b) pose d'une couche (62) constituée d'une masse de polyuréthane sur la bande de natte de fibres (58) pour la formation du noyau (18), cette masse de polyuréthane contenant du polyuréthane et, le cas échéant, des charges ;
c) application d'une colle sur le côté supérieur du noyau (18) ;
d) collage d'un composite à couches (24) en forme de bande sur le côté supérieur du noyau (18), enduit de colle ; et
e) découpe de la bande fabriquée à l'étape d) en plaques de sol (10).

11. Procédé de fabrication d'une plaque de sol selon l'une des revendications 1 à 9, **caractérisé par** les étapes suivantes :
a') pose d'un composite à couches (24) en forme de bande sur une bande de support (52) ;
b') pose d'une couche (62) de masse de polyuréthane sur le composite à couches (24) en forme de bande pour la formation du noyau (18), ladite masse de polyuréthane contenant du polyuréthane et, le cas échéant, des charges ;
c') application d'une colle sur le côté supérieur du noyau (18) ;
d') collage d'une bande de natte de fibres (58) qui est constituée de fibres de verre, de PET, de PP, de polyester ou de matières premières renouvelables et est étanchéifiée d'un côté par une couche de barrière (22), sur le côté supérieur du noyau (18), enduit de colle, de façon à ce que la couche de barrière (22) se trouve en bas ; et
e') découpe de la bande fabriquée dans l'étape d') en plaques de sol (10).

12. Procédé selon la revendication 10 ou 11, **caractérisé en ce que**, pendant ou après l'étape c) ou c') de la couche de masse de polyuréthane (62), de la chaleur est apportée pour la formation du noyau (18).

13. Procédé selon l'une des revendications 10 à 12, **caractérisé en ce que** la bande natte de fibres est une bande non tissée (58).

14. Procédé selon l'une des revendications 10 à 13, **caractérisé en ce que** la bande de natte de fibres (58) est une bande tissée.

15. Procédé selon l'une des revendications 10 à 14, **caractérisé en ce que**, après l'étape e) ou e'), les plaques de sol (10) qui en résultent sont profilées au niveau d'au moins deux arêtes externes opposées.
